# EUROPEAN PATENT APPLICATION

(11) **EP 3 056 619 A1**
(43) Date of publication of application: **17.08.2016**
(21) Application number: 16154935.7
(22) Date of filing: 09.02.2016
(51) Int. Cl.: E03F 5/16, E03C 1/00

(54) **GREASE TRAP DEVICE**

(30) Priority: 13.02.2015 GB 201502432
(71) Applicant: Mechline Developments Limited, Milton Keynes MK11 3ER (GB)
(72) Inventor: SAGE-PASSANT, Peter, Milton Keynes, Buckinghamshire MK11 3ER (GB)
(74) Representative: Morris, Jonathan Paul

(57) **Abstract**

A grease trap (1) device for trapping waste material, said waste material including water and FOGs, and for removing at least some of the FOGs from the water. The grease trap device (1) including: a first receptacle (3) having a storage volume (31) for storing waste material in a manner that enables FOGs to float on the surface of the water; an inlet (9) for receiving waste material into the first receptacle; a drain (49) having an inlet (47) positioned and arranged to capture FOGs floating at and/or near the surface of the water, and an outlet (51) positioned and arranged for transferring waste material out of the storage volume (31); a valve (53) for controlling the flow of waste material through the drain (49); an outlet (15) enabling cleaned water to exit the first receptacle (3); and at least one heat exchanger (57,59) unit arranged to remove heat from the waste material stored in the first receptacle.

## Description

The present invention relates to a grease trap device, and a water system including the grease trap device.

Traditional grease traps are commonly used to capture fats, oils and/or greases (FOGs) from waste water generated by cooking and cleaning processes carried out in commercial kitchens. The FOGs are often generated in sinks, dishwashers and cooking appliances and are discharged directly into the kitchen's drainage system. Grease traps are installed in-line in the waste pipework leading from the kitchen, in order to mechanically trap the FOGs and facilitate their removal before the FOGs can reach the main sewer, where they can build up over time and cause damage to the sewage infrastructure by creating blockages.

Grease trap technology is well-known and proven. A grease trap slows and temporarily captures FOGs laden water between baffles and allows the water time to cool. As the water cools, the FOGs congeal within the trapped water and naturally float to the surface of the water where they can be collected for removal for disposal or recycling.

Ideally grease traps should be located outside of the kitchen area because they require opening on a regular basis in order to facilitate the removal and disposal of the captured FOGs. FOGs are usually removed from the grease trap by a specialist worker, who is equipped with specialist vacuum equipment required to suck out waste materials from the grease trap.

By its nature, this work is messy, noisy and disruptive, and it is highly undesirable to open a grease trap in a commercial kitchen environment and expose the kitchen to the bad smells and the risk of contamination that this causes. In addition, calling in specialist contractors to empty grease traps on a regular basis is expensive.

However, it is not always possible to locate a grease trap outside of the commercial kitchen due to space or access restrictions, and as a result, many kitchens are forced to endure the disruption and potential for contamination caused by opening the grease trap. In extreme cases, commercial kitchens are forced to close while the work is carried out, further adding to the disruption and cost.

Commercial kitchens use a great deal of hot water for their cooking and cleaning operations, and the demand for hot water naturally coincides with times when the maximum volumes of waste water are likely to be discharged into the grease trap. In traditional grease traps, the heat energy is naturally dissipated through the outer walls and lid of the grease trap and is lost to the atmosphere. This is unsatisfactory.

Traditional grease traps are manufactured from stainless steel or cast iron. This provides a structure having sharp edges and corners, which are extremely difficult to keep clean. This is unsatisfactory for a commercial kitchen.

Accordingly the present invention seeks to provide a grease trap device, and a water system, that mitigates at least one of the aforementioned problems, or at least provides an alternative to existing systems. In particular, the invention seeks to provide a grease trap device that achieves at least one of the following: removes the requirement for visits to the kitchen by specialist workers to carry out the grease trap emptying work; recovers and utilises heat energy from the waste water; provides a structure that is easier to clean than traditional grease traps.

According to one aspect of the invention there is provided a grease trap device for trapping waste material, said waste material including water and FOGs, and for removing at least some of the FOGs from the water; said grease trap device including: a first receptacle having a storage volume for storing waste material in a manner that enables FOGs to float on the surface of the water; an inlet for receiving waste material into the first receptacle; a drain having an inlet positioned and arranged to capture FOGs floating at and/or near the surface of the water, and an outlet positioned and arranged for transferring waste material out of the storage volume; a valve for controlling the flow of waste material through the drain; and an outlet enabling cleaned water to exit the first receptacle.

The present invention facilitates removal of FOGs from the grease trap by means of a drain-off valve which, when opened, automatically skims the correct level of fluid and FOGs from the surface of the water held in the grease trap. Removal of the FOGs by use of the drain-off valve means that there is no requirement to open or remove a grease trap lid, which remains sealed at all times, therefore greatly reducing the risk of bad odours or contamination in the kitchen from the contents of the grease trap.

The invention provides a grease trap device which is designed to facilitate the safe, hygienic, and easy removal of grease from the grease trap on a regular basis by kitchen staff, thereby removing the requirement for visits to the kitchen by specialist workers to carry out the grease trap emptying work. By providing the means for kitchen staff to empty the grease trap themselves, the kitchen staff can decide on the most appropriate time to carry out the work and thereby reduce or eliminate disruption to the kitchen operation, as well as making a substantial saving on cost.

Advantageous features of preferred embodiments are disclosed in the dependent claims and in the statements of invention below.

The drain inlet is positioned below a maximum water level. The valve is located within the first receptacle. The waste material flows through the drain, when the valve is in an opened condition, under the action of gravity. The drain outlet is positioned and arranged to drain waste material out of the first receptacle.

Advantageously the device includes a second receptacle for capturing the FOGs removed from the first receptacle via the drain. When the valve is opened, waste material is drained from the first receptacle and is deposited into the second receptacle. The waste material drained from the first receptacle includes FOGs, and typically includes a quantity of water. The contents of the second receptacle can be safely and hygienically removed for disposal into a suitable container. The drain outlet is positioned adjacent the second receptacle, and preferably above the second receptacle when the device is in its normal operating orientation.

The second receptacle is movably mounted, and preferably slidably mounted, with respect to the first receptacle. In preferred embodiments the second receptacle is a separate component from the first receptacle and is removably mounted to the first receptacle.

The first receptacle includes a base and at least one side wall. In preferred embodiments the first receptacle has a substantially cuboid form, and therefore includes four side walls. In preferred embodiments the second receptacle is located towards the base of the first receptacle. For example, a recess can be formed in a lower portion of the first receptacle and the second receptacle can be stored within the recess.

Advantageously the device includes a locking mechanism for selectively locking the position of the second receptacle with respect to the first receptacle.

Advantageously the device includes including a manually operable control for controlling operation of the valve. The manually operable control allows a user to open the valve to drain FOGs from the first receptacle. The manually operable control allows a user to close the valve to prevent further waste from draining from the first receptacle.

In preferred embodiments the manually operable control controls operation of the locking mechanism.

The manually operable control and the locking mechanism are arranged such that: the locking mechanism is in the locked condition when the valve is open, thereby locking the second receptacle to the first receptacle; and/or the locking mechanism is in the unlocked condition when the valve is closed, thereby unlocking the second receptacle with respect to the first receptacle. Thus it is not possible to remove the second receptacle from the first receptacle when the valve is open. It is only possible to remove the second receptacle with respect to the first receptacle when valve is closed. This prevents spillages from occurring.

The first receptacle includes a reception volume adjacent the waste material inlet for receiving incoming waste material; a central volume for storing waste material; and an outgoing volume adjacent the outlet, through which the cleaned water passes on route to the cleaned outlet.

Advantageously the device includes a first baffle located within the first receptacle adjacent the waste material inlet. The reception volume is partially separated from the central volume by the first baffle. The arrangement is such that waste material flowing into the first receptacle via the water inlet flows into the reception volume and around the first baffle into the central volume. The incoming waste material is directed towards the base of the first receptacle. The waste material flows under the first baffle into the central volume of the first receptacle, there being a gap between the base and a lower portion of the first baffle. Thus the central volume is contiguous with the reception volume.

The waste material inlet is arranged substantially orthogonally to a surface of the first baffle which faces the inlet. The first baffle has a substantially rectangular cross-section, albeit with convex upper and lower surfaces. The waste material flowing into first receptacle follows a tortuous path. It is turned through approximately 90 degrees when it meets the first baffle. The water is turned through approximately 180 degrees when it meets the base.

Advantageously the device includes a second baffle located within the first receptacle adjacent the cleaned water outlet. The outgoing volume is partially separated from the central volume by the second baffle. The arrangement is such that water flowing out of the first receptacle flows from the central portion around the second baffle, into the outgoing volume, and then into the cleaned water outlet. The outgoing water flows under the second baffle, there being a gap between the base and a lower portion of the second baffle. Thus the outgoing volume is contiguous with the central volume.

The cleaned water outlet is arranged substantially orthogonally to a surface of the second baffle which faces the water outlet. The water flowing out of the first receptacle follows a tortuous path. It is turned through approximately 180 degrees, directed by the base and second baffle. When exiting the receptacle via the outlet, the water is turned through approximately 90 degrees.

Advantageously the device includes at least one heat exchanger.

The or each heat exchanger unit is arranged to remove heat from the waste material stored in the first receptacle. This feature enables the invention to recover and utilise heat energy from the waste material. It also promotes FOG congealing since the water stored in the first receptacle cools more quickly, which speeds up the congealing process. Therefore the waste material can have a shorter residence time within the grease trap.

The or each heat exchanger unit includes an arrangement of piping. The piping is arranged in a tortuous fashion, typically in a coiled or raster pattern. The piping includes an inlet, which is connectable to a source of a heat transfer medium, for example a cold water supply. By feeding the heat transfer medium through the heat exchanger piping at a temperature that is lower than the temperature of the waste material in the first receptacle, heat is transferred from the warmer waste material into the heat transfer medium. The piping includes an outlet, which is connectable to, for example additional apparatus, such as a boiler or a storage receptacle such as a water tank. The heated heat transfer medium is fed to the additional apparatus, where the energy required to heat the heat transfer medium to an operating temperature is reduced because of the heat supplied from the grease trap.

In preferred embodiments at least one of heat exchangers is removably mounted in the first receptacle.

The first receptacle includes a first compartment and a first heat exchanger unit is mounted in the first compartment. The first compartment is sealed from the waste material storage volume. The first heat exchanger unit is removably mounted in the first compartment. The first heat exchanger unit is in the form of a first cassette that is arranged to be inserted into, and removed from, the first compartment. Since the first heat exchanger unit is separated from the waste material, it does not become caked with oil, grease or fat.

The first compartment includes a first opening and the first heat exchanger unit is insertable into the first compartment, and removable therefrom, via the first opening. In preferred embodiments, the first opening is located in a wall of the first receptacle, such as a side wall. The first opening is accessible from an outer side of the first receptacle. This enables the first heat exchanger unit to be inserted into, and/or be removed from, the first compartment without any waste material stored in the storage volume leaking from the first receptacle.

The first compartment is at least partly located within the first baffle. It will be appreciated that the warm waste material heats the walls of the first receptacle including the first baffle, and that heat can be transferred from the warm waste material to the first heat exchanger through the first baffle.

The first receptacle includes a second compartment and a second heat exchanger unit is mounted in the second compartment. The second compartment is sealed from the waste material storage volume. The second heat exchanger unit is removably mountable in the second compartment. Since the second heat exchanger unit is separated from the waste material, it does not become caked with oil, grease or fat.

The second compartment includes a second opening and the second heat exchanger unit is insertable into the second compartment, and removable therefrom, via the second opening.

In preferred embodiments, the second opening is located in a wall of the second receptacle, such as a side wall. The second opening is accessible from an outer side of the first receptacle. This enables the second heat exchanger unit to be inserted into, and/or be removed from, the second compartment without any waste material stored in the storage volume leaking from the first receptacle. The second heat exchanger unit is in the form of a second cassette that is arranged to be inserted into, and removed from, the second compartment.

Optionally, an interconnecting pipe can be provided between the first and second heat exchangers. Preferably the interconnecting pipe connects the outlet from the first heat exchanger unit to the inlet of the second heat exchanger. Thus the first and second heat exchangers can be connected in series, with only one of the first and second heat exchangers being connected to the cold water source, and the other of the first and second heat exchangers being connected to the further piping and additional apparatus.

The second compartment is at least partly located within the second baffle. It will be appreciated that the warm waste material heats the walls of the first receptacle including the second baffle, and that heat can be transferred from the warm waste material to the heat exchangers through the baffles. As warm waste material passes into the grease trap from the kitchen's drainage system, the baffles become immersed in a continuous supply of warm water and become heated.

In preferred embodiments at least one of the first and second compartments includes a second heat transfer medium, such as a heat transfer gel, which is arranged to promote heat transfer between the first receptacle and the heat exchanger(s).

Advantageously the device includes an alert system arranged to alert a user to drain FOGs from the first receptacle.

The alert system includes a timing device, and the alert system is arranged to issue an alert according to inputs received from the timing device. The timing device is programmable. This enables the user to set the alert period to suitable period of time, for example to issue an alert every day, every two days, every three days, etc.

The alert system includes at least one of a visual display unit (VDU), an indicator lamp, and a speaker; and the alert system is arranged to issue at least one of visual and audio alerts. In preferred embodiments the grease trap device includes a power source, such as at least one cell.

The alert system receives an input signal from the manually operable control. In preferred embodiments, the alert issued, for example an audible sound, continues until the user operates the manually operable control. Operating the manually operable control cancels the alert.

Advantageously the grease trap device can include an electric generator device, for example a thermoelectric generator device. The generator device is arranged to supply electricity to the alert system. In preferred embodiments the alert system includes at least one rechargeable cell, and the generator device is arranged to recharge the at least one rechargeable cell.

Advantageously the drain includes a funnel formation at the receptacle inlet, which collects FOGs floating at and/or near the surface of the water. The funnel formation has an opening area, which is sized as a significant proportion of the surface area of the water, typically around at least 20% of the surface area of the water. The funnel formation increases the proportion of congealed FOGs that is drawn from the surface of the water when the valve is opened. Because any FOGs trapped in the grease trap will naturally float to the surface of the trapped fluid, the skimmer funnel increases the efficiency of the drain-off valve in collecting the FOGs and depositing them in the second receptacle.

In a condition where the first receptacle is mounted in its normal operating orientation, the drain inlet is positioned at a height, which is below the height of the cleaned water outlet. In a condition where the first receptacle is mounted in its normal operating orientation, the drain inlet is positioned at a height, which is below the height of the waste material inlet.

Advantageously the first receptacle includes a removable lid. The lid seals the first receptacle when closed.

Advantageously the first receptacle is moulded from a plastics material. This provides smooth rounded corners, which are easy to clean. In preferred embodiments the first receptacle is formed by a rotary moulding process. The inventors have found that rotary moulding provides a good liquid tight arrangement that is easy to clean. In preferred embodiments the first receptacle is formed from a high-density polyethylene (HDPE) material.

According to another aspect of the invention there is provided a water system including a waste material source, said waste material including water and FOGs, a grease trap device according to any one of the preceding claims, a first line connecting the waste material source to the grease trap device waste material inlet, and a drain connected to the grease trap device cleaned water outlet.

The water system includes a cold water source and a line connecting the cold water source to a heat exchanger unit inlet.

The water system includes an appliance, such as a heating system boiler, and a line connecting the appliance to a heat exchanger unit outlet.

According to another aspect of the invention there is provided a grease trap device for trapping waste material, said waste material including water and FOGs, and for removing at least some of the FOGs from the water; said grease trap device including: a first receptacle having an inlet for receiving the waste material; an outlet for cleaned water; and at least one heat exchanger unit arranged to remove heat from the waste material stored in the first receptacle. The heat exchanger is arranged to cool the waste water, thereby promoting congealing of the FOGs. Advantageously this aspect of the invention can include any feature, or any combination of features, from any other aspect of the invention.

According to another aspect of the invention there is provided a grease trap device for trapping waste material, said waste material including water and FOGs, and for removing at least some of the FOGs from the water; said grease trap device including: a first receptacle having an inlet for receiving the waste material, and an outlet for cleaned water; wherein the first receptacle is manufactured by a rotary moulding process. Advantageously this aspect of the invention can include any feature, or any combination of features, from any other aspect of the invention.

An embodiment of the present invention will now be described, by way of example only, with reference to the accompanying drawings in which:
Figure 1 is an isometric view of a grease trap device in accordance with the invention, in the context of plumbed water system;
Figure 2 is an isometric view of the grease trap device of Figure 1, showing a front view of the device with a FOGs collection tray in a withdrawn state;

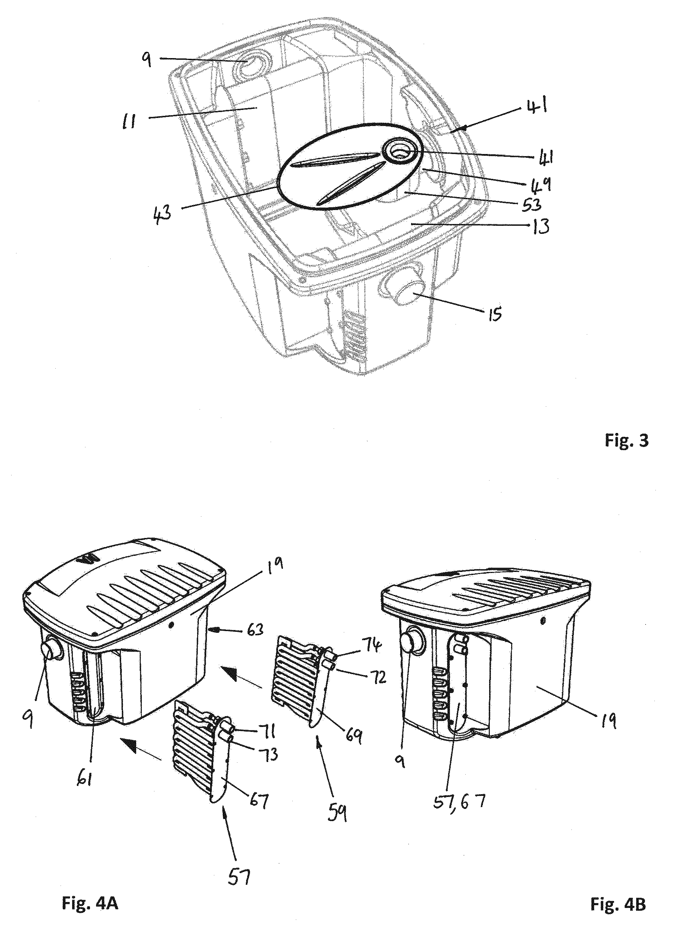

Figure 3 is an isometric view of the grease trap device of Figure 1 with a lid removed to show the interior thereof;
Figures 4A & 4B are isometric views of the grease trap device of Figure 1, showing rear views, and illustrating insertion and removal of first and second heat exchangers;
Figure 5 is a diagrammatic cross-sectional view of a rear portion of the grease trap device of Figure 1, illustrating the positions of the first and second heat exchangers within first and second baffles respectively; and
Figures 6A and 6B are diagrammatic cross-sectional views of a front portion of the grease trap device of Figure 1, illustrating the way in which FOGs and some waste water are drained from the device.

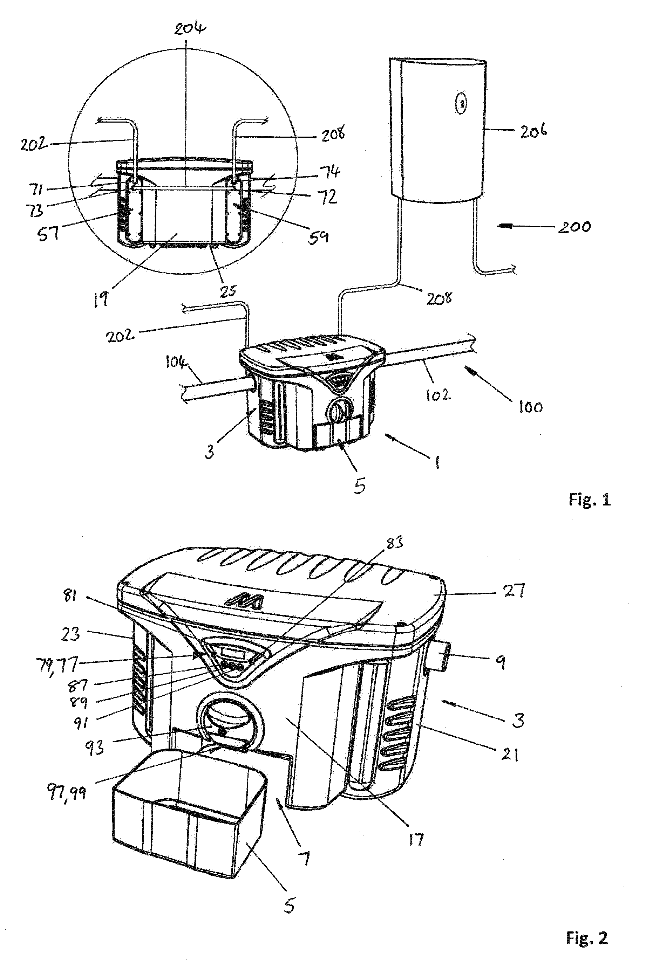

Figure 1 shows a grease trap unit 1 plumbed into a waste water system 100 and a heating system 200.

The grease trap unit 1 includes first and second receptacles 3,5.

The second receptacle 5 is in the form of a tray, which is removably attachable to a lower portion of the first receptacle 3. The first receptacle 3 includes a recessed portion 7 and the tray 5 is stored in the recessed portion 7 and is removable therefrom.

The first receptacle 3 is substantially cuboid in shape, and includes a front wall 17, a rear wall 19, first and second side walls 21,23, a base 25 and a lid 27. The first receptacle 3 is made from a moulded plastics material, and is preferably rotary-moulded to produce smooth rounded edges and corners for ease of cleaning.

The first receptacle 3 includes a waste material inlet 9, and a cleaned water outlet 15. The waste material is mainly in the form of waste water, which includes water and FOGs. The receptacle 3 includes first and second baffles 11,13. The first baffle 11 is located adjacent the inlet 9. The second baffle 13 is located adjacent the outlet 15. The arrangement provides a reception storage volume 29, a main storage volume 31 and an outgoing storage volume 33.

The reception storage volume 29 is defined by the first side wall 21, front and rear walls 17,19, base 25 and first baffle 11. Waste water entering the first receptacle 3 via the waste material inlet 9 flows initially into the reception storage volume 29. A first aperture or gap 37 is provided between a lower portion of the first baffle and the base 25 of the first receptacle. Thus the reception storage volume 29 is contiguous with the main storage volume 31, which enables water flowing into the reception storage volume 29 to flow into the main storage volume 31.

The main storage volume 31 is defined by the front and rear walls 17,19, base 25 and first and second baffles 11,13. Waste water resides in the main storage volume 31 for a period of time. This enables FOGs to congeal and float to the surface of the waste material.

A second aperture or gap 39 is located at or near the base of the second baffle, thus the outgoing storage volume 33 is contiguous with the main storage volume 31. This enables water to flow from the main storage volume 31 into the outgoing storage volume 33, and from there into the cleaned water outlet 15.

The outgoing storage volume is defined by the second side wall 23, front and rear walls 17,19 and second baffle 13.

A drainage system 41 is located in the main storage volume 31 and is arranged for removing at least some of the FOGs floating at or near the surface of the waste material, from the first receptacle 3. The drainage system 41 includes a funnel 43 mounted adjacent a conduit inlet 47, a conduit 49, a conduit outlet 51 and a valve 53. The valve 53 controls the flow of material through the conduit 49. In a closed condition, material is blocked from reaching the outlet 51. In an open condition, material flows through the conduit 49 to the outlet 51, which is arranged to deposit the material drained from the first receptacle 3 into the tray 5.

The funnel 43 is located below the surface of the water. It is positioned at predetermined distance below the surface of the water, when the surface water is at its maximum depth. This is typically at a depth when the water surface is substantially level with at least one of the inlet 9 and outlet 15.

The funnel 43 has a large surface area at its entrance and is arranged to capture waste material and FOGs from the surface of the water, and direct them into the conduit inlet 47.

When the valve 53 is open, and waste material is draining from the first receptacle 3 into the tray 5, the level of the water within the first receptacle drops to a height that is substantially level with the entrance of the funnel 43. This effectively limits the volume of waste material that can be drained from the first receptacle 3 in one operation. Since the maximum and minimum water heights are known, the tray 5 is sized to have a sufficient volume to accommodate the maximum volume of waste material that can be drained from the receptacle in an operation, thereby preventing spillages from occurring.

The grease trap unit 1 includes a manually operable control 93, and preferably a rotatable manually operable control, such as a knob or handle. The control 93 actuates the valve 53 in response to a manual input. This enables a user to open and close the valve 53, as required. Preferably the control 93 is located on the front wall 17 of the receptacle for ease of access.

The grease trap unit 1 further includes a locking mechanism 97, which is arranged to selectively lock and unlock the tray 5 within the recessed portion 7. The locking mechanism 97 is operated by the control 93. The locking mechanism includes a locking member 99 which is actuated by rotating the control 93. The arrangement is such that when the valve 53 is in the closed condition, the locking member 99 is in the "unlocked" position thereby enabling the tray 5 to be removed from the recessed portion 7; and when the valve 53 is in the open condition, the locking member 99 is in the "locked" position thereby locking the tray 5 within the recessed portion 7. This prevents a user from withdrawing the tray 5 from the recessed portion 7 while waste material is draining from the first receptacle 3.

The grease trap unit 1 further includes first and second heat exchangers 57,59. The first heat exchanger 57 is located in a first cavity 61 within the first baffle 11. The second heat exchanger 59 is located within a second cavity 63 within the second baffle 13. Each of the first and second heat exchangers 57,59 is a self-contained unit which is removably mounted within its respective cavity 61,63. Each heat exchanger 57,59 comprises an arrangement of pipes, preferably in a coiled or raster-like pattern. Each heat exchanger 57,59 includes a mounting plate 67,69 which is arranged to close off the respective cavity 61,63 when the heat exchanger 57,59 is located in-situ. Each heat exchanger 57,59 includes an inlet 71,72 and an outlet 73,74. Optionally, each of the cavities 61,63 may include a gel or other substance for promoting thermal transfer between the piping and the respective baffle 11,13. Additionally, or alternatively, the heat exchanger piping may include fins 76 to promote heat transfer.

The heat exchangers 57,59 are arranged to extract heat from the waste material and to use the heat extracted in a beneficial manner, for example by circulating a heat transfer medium such as cold water within the heat exchanger piping. The water circulated within the piping is at a lower temperature than the waste water within the receptacle 3. The main purpose of extracting heat from the waste material is to cool the FOGs trapped within the waste material thereby promoting congealing of the FOGs. This enables the FOGs to be removed from the waste material more quickly. The heat extracted from the waste material can be provided to another system, for example it can be provided to an input side of a water boiler 206. The boiler 206 would use less energy to heat the water to a target temperature, since the water supplied to it is warmer than would normally be supplied.

An electronic unit 77 is mounted on at least one of the lid 27 and a receptacle wall 17,19,21,22. Preferably the electronic unit 77 is mounted on or to the front wall 17. The electronic unit 77 includes a timing device 79, visual display 81, speaker 83, controls 87,89,91 and a battery (not shown). The purpose of the electronic unit 77 is to issue an alert to the user to have the user actuate the control 93 to drain waste products from the first receptacle 3. For example, the timing device 79 can be programmed using at least one of the controls 87,89,91 to remind the user to undertake the draining action periodically, such as each day, two days, three days, etc. The alert can be provided by at least one of the visual display device 81, an indicator lamp (not shown) and the speaker 83.

Optionally, the electronic unit 77 can include an electricity generator (not shown). For example, the electronic unit 77 can include a thermoelectric generator, which generates electricity by means of a temperature difference. A temperature difference can be obtained, for example between the temperature of the waste material within the first receptacle and the temperature outside the first receptacle. The battery can be of the rechargeable type and the electricity generated is preferably used to recharge the battery. Of course, it may be possible in some circumstances to power the alert system directly from the electricity generator as an alternative to the battery or in addition to the battery.

In use, the grease trap unit 1 is plumbed into the waste material system 100. The waste water system 100 includes an appliance such as a dishwasher, sink, or drain, etc, which generates or receives waste water. The waste water system 100 includes a first pipe 102, which connects the receptacle inlet 9 to the appliance; and a second pipe 104, which connects the receptacle outlet 9 to a drain.

The heat exchanger inlet 71 of the first heat exchanger is connected to a cold water source (not shown) via a pipe 202. The outlet 73 of the first heat exchanger is connected to the inlet 72 of the second heat exchanger by a pipe 204. The outlet 74 of the second heat exchanger is connected to apparatus requiring warmed water, such as the boiler 206, via a pipe 208. While this is the preferred arrangement, it is possible to connect the cold water source to the second heat exchanger 59 and the appliance requiring warmed water to the first heat exchanger 57.

The valve 53 is normally in the closed condition.

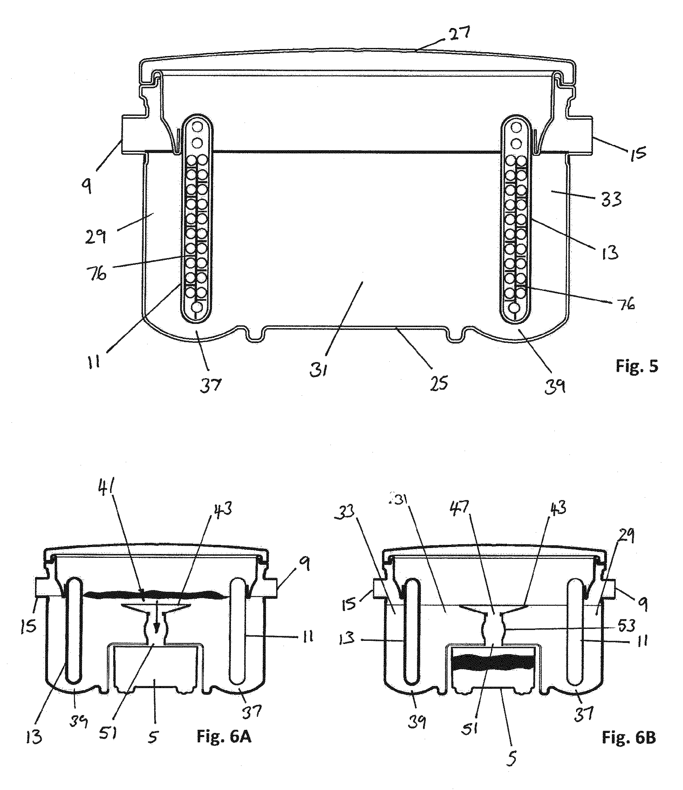

Waste water carrying FOGs enters the receptacle 3 via the inlet 9. The water enters the reception storage volume 29. The first baffle 11 directs the water downwards, turning the waste water through approximately 90 degrees, towards the base 25 of the receptacle. Waste water passes from the reception storage volume 29 into the main storage volume 31 via the first aperture or gap 37, turning approximately 180 degrees. The waste material resides within the storage volume 31 for a period of time, thereby enabling FOGs to solidify/congeal and float to the surface of the waste water as illustrated in Figure 6A.

When the user receives an alert from the electronic unit 77, the user operates the control 93 to open the valve 53, which also locks the tray 5 in the recess 7.

When the valve 53 opens, waste material (FOGs and water) above the funnel 43 flows into the tray 5 via the funnel 43 and conduit 49. When the waste water level falls to approximately the level of the funnel 43, no further waste material is drained from the receptacle 3. The user then turns the control 93 to close off the valve 53. This also unlocks the tray 5. The user removes the tray from the recessed portion 7 and the waste material is disposed of. The tray 5 is then returned to the recessed portion 7.

The process is repeated when the next alert is received from the electronic unit 77.

Of course, it will be appreciated that the user can drain waste material from the first receptacle 3 at any time. The electronic unit 77 enables a schedule to be preprogramed to ensure that the receptacle is drained on a periodic basis, to prevent an excessive accumulation of FOGs.

When there is a surge of waste water into the first receptacle 3 via the inlet 9, and the waste water is already at or near its maximum level, the incoming waste water pushes cleaned water from the main storage volume 31 into the outgoing storage volume 33 via the second aperture or gap 39. The cleaned water turns through approximately 180 degrees. This in turn pushes water from the outgoing storage volume 33 into the outlet 15, turning through approximately 90 degrees. The cleaned water exiting the first receptacle 3 is not necessarily pure water, since it may still contain some FOGs, however the water is cleaner than the waste water that entered the unit.

Although the present invention has been described in connection with specific preferred embodiments, it should be understood that the invention as claimed should not be unduly limited to such specific embodiments. Furthermore, it will be apparent to the skilled person that modifications can be made to the above embodiment that fall within the scope of the invention.

## Claims

1. A grease trap (1) device for trapping waste material, said waste material including water and FOGs, and for removing at least some of the FOGs from the water; said grease trap device (1) including: a first receptacle (3) having a storage volume (31) for storing waste material in a manner that enables FOGs to float on the surface of the water; an inlet (9) for receiving waste material into the first receptacle; positioned and arranged to capture FOGs floating at and/or near the surface of the water, a drain (49) having an inlet (47) and an outlet (51) positioned and arranged for transferring waste material out of the storage volume (31); a valve (53) for controlling the flow of waste material through the drain (49); an outlet (15) enabling cleaned water to exit the first receptacle (3); and at least one heat exchanger (57,59) unit arranged to remove heat from the waste material stored in the first receptacle (3).

2. A device according to claim 1, including a second receptacle (5) for capturing the waste material removed from the first receptacle (3) via the drain (49), wherein the second receptacle (5) is movably mounted, and preferably slidably mounted, with respect to the first receptacle (3).

3. A device according to claim 2, wherein the second receptacle (5) is a separate component from the first receptacle (3) and is removably mounted to the first receptacle (3).

4. A device according to claim 2 or 3, including a locking mechanism (97) for selectively locking the position of the second receptacle (5) with respect to the first receptacle (3).

5. A device according to claim 4, including a manually operable control (93) for controlling operation of the locking mechanism (97) and the valve (53).

6. A device according to claim 5, wherein the manually operable control (93) and the locking mechanism (97) are arranged such that: the locking mechanism (97) is in the locked condition when the valve (53) is open, thereby locking the second receptacle (5) to the first receptacle (3); and/or the locking mechanism (97) is in the unlocked condition when the valve (53) is closed, thereby unlocking the second receptacle (5) with respect to the first receptacle (3).

7. A device according to any one of the preceding claims, including at least one of a first baffle (11) located within the first receptacle adjacent the inlet (9); and a second baffle (13) located within the first receptacle adjacent the outlet (15).

8. A device according to any one of the preceding claims, wherein at least one heat exchanger unit (57,59) is releasably attached to first receptacle (3).

9. A device according to any one of the preceding claims, wherein the first receptacle (3) includes a first compartment (61), and a first heat exchanger unit (57) is mounted in the first compartment (61).

10. A device according to claim 9, the first heat exchanger unit (57) is removably mounted in the first compartment (61).

11. A device according to any one of the preceding claims, wherein the first receptacle (3) includes a second compartment (63), and a second heat exchanger (59) unit is mounted in the second compartment (63).

12. A device according to claim 11, wherein the second heat exchanger (59) is removably mounted in the second compartment (63).

13. A device according to any one of claims 9 to 12, wherein at least one of the first and second compartments (61,63) includes a thermal transfer medium, such as a thermal transfer gel, arranged to promote heat transfer between the first receptacle (3) and the heat exchanger unit(s) (57,59).

14. A device according to any one of the preceding claims, including an alert system (77) arranged to alert a user to drain FOGs from the first receptacle (3).

15. A device according to claim 14, wherein the alert system (77) includes a timing device (79), and the alert system (77) is arranged to issue an alert according to inputs received from the timing device (79); and/or the alert system (77) includes at least one of a visual display unit (VDU) (81), an indicator lamp, and a speaker (83); and the alert system (77) is arranged to issue at least one of visual and audio alerts.

16. A device according to claim 14 or 15, wherein the alert system (77) receives an input signal from the manually operable control (93).

17. A device according to any one of the preceding claims, including an electric generator device, and preferably a thermoelectric generator device.

18. A device according to claim 17 when dependent on any one of claims 14 to 16, wherein the generator device is arranged to supply electricity to the alert system (77), and preferably at least one rechargeable cell is provided, and the generator device is arranged to recharge the at least one rechargeable cell.

19. A device according to any one of the preceding claims, wherein the drain (49) includes a funnel (43) formation at the inlet, which collects FOGs floating at and/or near the surface of the water.

20. A water system (100) including a waste material source, said waste material including water and FOGs, a grease trap device according to any one of the preceding claims, a first line (102) connecting the waste material source to the grease trap device (8) waste material inlet (9), and a drain connected (104) to the grease trap device cleaned water outlet.

21. A water system according to claim 21, including a cold water source and a line connecting the cold water source to a heat exchanger unit inlet (71).
